# EUROPEAN PATENT SPECIFICATION

(11) **EP 0 880 386 B1**
(45) Date of publication and mention of the grant of the patent: **08.03.2000**
(21) Application number: 96937198.8
(22) Date of filing: 12.11.1996
(51) Int. Cl.: B01D 3/08, B01D 1/22

(54) **ROTATIVE HEAT TRANSMISSION BODY FOR EVAPORATING LIQUIDS OR DRYING PUMPABLE PRODUCTS**
ROTIERENDER WÄRMEÜBERTRAGUNGSKÖRPER ZUR VERDAMPFUNG VON FLÜSSIGKEITEN ODER ZUR TROCKNUNG VON PUMPFÄHIGEN PRODUKTEN
ENSEMBLE ROTATIF DE TRANSMISSION DE CHALEUR SERVANT A EFFECTUER L'EVAPORATION DE LIQUIDES OU LE SECHAGE DE PRODUITS POUVANT ETRE POMPES

(30) Priority: 14.11.1995 DK 126995
(43) Date of publication of application: 02.12.1998
(73) Proprietor: JENSEN, Erik, DK-2860 Soborg (DK)
(72) Inventor: JENSEN, Erik, DK-2860 Soborg (DK)
(74) Representative: Plougmann, Vingtoft & Partners A/S
(86) International application number: DK9600466
(87) International publication number: WO9718023

(56) References cited:
- WO-A-91/01784
- DE-A- 2 702 355
- US-A- 4 193 837
- PATENT ABSTRACTS OF JAPAN, Vol. 10, No. 85, C-336; & JP,A,60 220 101 (JINICHI NISHIMURA), 2 November 1985.

## Description

The invention relates to a heat transmission body which in connection with alternative apparatus constructions make it well suited either for evaporation of solutions/suspensions which have a tendency to form deposits on the heat transmission surface or for drying viscous pumpable products. In WO-A-9101784 such a heat transmission body is disclosed. Through the development of the present apparatus construction, solutions have been obtained in which the following demands are met:
1. Production of units with a large heat transmission surface area.
2. Development of an integrated system which keeps the evaporation surface free of deposits.
3. Achievement of a good heat transmission with vapour as a heat medium by constructing the evaporation body in sections connected in series with decreasing flow passage areas, whereby each section provides the flow speed which gives the best heat transmission, adapted according to the reduction of the vapour volume in accordance with the condensation of the vapour. The construction gives at the same time a reliable transport of the condensate and false air towards the condensate outlet.
4. By an apparatus embodiment designed for evaporation, a continually increasing concentration of dry matter in the liquid is obtained, so that a high concentration in the residue can be obtained without a substantial decrease in the average heat transmission.
5. An alternative construction which at the same time under a countercurrent between the developed vapour and the evaporating liquid gives contact between liquid and vapour and thus, when the liquid phase is a mixture of liquids with different boiling points, makes it possible under evaporation to achieve an efficient stripping of the easily evaporable liquid at the same time.
6. By an apparatus embodiment designed for drying of viscous pumpable products, it is possible to produce heat transmission bodies with such a large heat transfer area that by recompression of the produced vapour a large energy saving can be achieved compared to the energy consumption in conventional drying processes, which primarily use air as a heat transferring medium.

### EVAPORATION

An apparatus designed for evaporating liquid and which fulfils the stated purpose is constructed with a rotating evaporation unit built into a horizontal cylindrical housing in which the evaporation body is constructed using plane parallel ring channel plates, which are connected to the tubular mid-section by welding.

By creating in this way a constant distance between the evaporation surfaces between the ring channel plates from the periphery and towards the mid-section, it is possible to establish a simple brushing or scraping of the evaporation surfaces, whereby long operational periods without a need for extra stops for cleaning are obtained, as will be described in more detail below.

Vapour is used as a heat medium, and the ring channels are therefore provided with radial partition walls forcing the vapour into a circular flow through the ring channels, the vapour being led in through an opening from the tubular mid-section, which is divided by means of a diametrical partition plate into a tube half for feeding vapour to the ring channels and the other half for discharge of vapour and condensate. At the connection to the next section, the discharging tube half leads directly into the tube half forming inlet to the ring channels of this section.

For evaporation of liquids which do not have a tendency to form deposits on the heat transmission surface, there are many different apparatus types, the most widely used types probably being falling film evaporators, and in more recent time plate heat exchangers. It is possible with both of these types of apparatus to construct very large heat transferring surfaces in an economical manner. Falling film evaporators are e.g. produced with pipe lengths of more than 10 m, and the welding work for each individual pipe is the same regardless of the length of the pipe, and the production price therefore does not increase proportionally with the capacity of the apparatus.

Plate heat exchangers are now produced with the area of the individual plates being so large that a single apparatus with a heat transmission surface of several hundred m² can be constructed.

However, a large evaporation capacity is not obtained even with a very large heat transmission surface if the composition of the solution results in quick formation of deposits on the heating surface, which gradually reduces the capacity of the apparatus to a fraction of the capacity of a newly cleaned evaporation surface, in addition comes possible stops for cleaning the surface. Apparatus are therefore produced in which the formation of deposits is prevented or reduced in different ways.

With an effective scraping or brushing of the heat transmission surface, deposits can be completely prevented, and nearly the same result can be obtained by creating a strong turbulence in the liquid film of the evaporator surface. An example of the latter is Luwa's thin film evaporator, in which a slim vertical cylinder is provided with a heating jacket, and the interior surface forms the evaporator surface. The apparatus has a centrally located fast rotating stirrer with wings that pass the cylindrical evaporator surface at the closest possible distance from the surface, whereby it keeps the liquid distributed on the evaporation surface in a thin film and at the same time creates a strong turbulence in the clearance between the wings and the evaporation surface.

The greatest limitation on the use of this type of apparatus is that the dimensions of the apparatus in relation to the active area are very large. An apparatus with a heat transmission surface of 40 m² can thus e.g. be produced with a total height of 12 m, of which the heat surface with a diameter of 1.7 m takes up 9.5 m. The price is high since the heat surface must be machined to maintain the narrow tolerance of the clearance between wings and heat transmission surface.

In order to exploit the apparatus as well as possible, one works with a relatively large temperature difference between the condensing vapour and the liquid being evaporated, and the usual methods for improving the energy consumption therefore cannot be used. These methods include, among others: Use of the produced vapour as a heat medium after recompression with a mechanical heat pump, partial recompression with a steam jet or a configuration with multi-stage evaporation.

A system with evaporation from a liquid film which is renewed periodically under strong turbulence in the liquid film is used in an apparatus described in Danish patent No. 120843. The heat transmission surface is here formed as a cylindrical rotor constructed of plates folded with deep inwardly extending axial folds, whereby the total heat transmitting surface in relation to the peripheral surface of the rotor can be increased by more than 1000%. The rotating evaporation body is mounted in a horizontal cylindrical housing from whose bottom liquid can be thrown up against the slowly rotating evaporation body by means of a rotor with gripping blades, and the evaporation surface will thus be strongly sprayed on for each revolution and thus kept free of deposits. The system is particularly well suited for evaporation under vacuum where the pressure difference per degree of temperature difference is less than it is at higher pressures. The folded surfaces are namely too expensive to produce when plates with a larger material thickness must be used. On the other hand, the system is well suited for operation with a heat pump. For constructional reasons it is, however, difficult to produce apparatus with a heat transmission surface of more than 150-200 m², and the system therefore does not seem to satisfy a growing demand for larger outputs.

An obvious solution for evaporation of solutions forming deposits is to establish a constant scraping or brushing of the entire evaporation surface, and this is also practised in apparatus composed of cylindrical or conical housings in which a part of the outer wall is provided with a heating jacket and the housing is provided with a centrally placed stirrer that can keep the entire heating surface free of deposits with scrapers. A disadvantage of this construction is that the liquid volume necessary to cover the heating surface is large and increases with the size of the apparatus, and even though the apparatus is simple to produce, it is only suitable for small outputs.

An apparatus which gives the possibility to construct a heat surface which can be kept clean either by scraping or by brushing is shown and described in US patent No. 1501515. According to the patent the heat transmission surface is constructed with circular rotating evaporation bodies composed of two conical discs facing each other which at the periphery are connected by welding to an intermediate ring. The ring functions to provide a distance between the discs which allows the placement of pipes for exhaust of condensate and false air. The individual heat transmission bodies are connected by cylindrical intermediate pieces that function both as an axle for the evaporation body and for conveying vapour and exhaust of condensate and false air. When used in connection with dirty solutions, scrapers are established that extend from the periphery and into the central connection between the discs. The integrally formed scrapers may in certain cases hinder the free movement of liquid and flow of vapour from the evaporation surface, and the system for distributing heating vapour and draining of false air does not give the optimal heat transmission.

The system using circular rotating evaporation bodies is otherwise mostly known in connection with drying processes, and the construction of evaporation bodies and the planning of the operational conditions for these is carried out based on the fact that drying of products which are supplied to the apparatus in a viscous state and discharged in powder form results in the average heat transmission being only about 75 kcal/m²h°C 1kcal = 4,184 kJ, whereas during the evaporation of easily flowing products, a heat transfer of the order of magnitude of 2000 kcal/m²h°C can be obtained. To obtain a reasonable capacity, one therefore operates with large temperature and pressure differences over the heat surfaces with products capable of tolerating high temperatures. In addition, there is a large pressure on the heat surface, and in order to obtain the necessary strength, the circular evaporation elements are formed either with a triangular cross section or possibly with a figure-eight-like cross section, which are not suited for a simple scraping. The heating bodies with the tubular supporting mid-section are normally assembled by welding, and since a certain space is necessary between the individual bodies in order to perform the welding, a poor exploitation of the volume taken up by the heating element is thereby obtained.

The object has been to construct an apparatus with a large evaporation capacity for liquids having a tendency to form deposits on the evaporation surface. As described, the most effective solution for cleaning the surface is to perform a scraping or brushing of the surface, and since a system with a stationary heating surface and a rotating scraping system can only be constructionally produced for small outputs, efforts have therefore been made to build an evaporation system with rotating heat transmission surfaces formed so that cleaning can be performed in a new and effective way and with a heat transmission surface so large that the system also can be operated at larger outputs by means of a heat pump or by multi-stage evaporation.

This object has been achieved by the rotatable hollow heat transmission body according to claim 1.

According to the invention such a heat transmission surface is constructed of ring channels which are connected to the tubular mid-section in a way which makes it possible for these to be mounted very closely and with forced passage of steam, condensate and false air.

In the known embodiments of the drying systems with rotating heating surfaces, heat transmission will fall in the direction of the powder outlet, but the supply of vapour to all the individual heat transmission bodies as a rule takes place at the same pressure from the same common vapour inlet conduit, and the result is that the same amount of vapour flows to each of the heat transmission bodies. At the bodies closest to the product inlet, heat transmission is so good that all of the disposable area is not used for condensation of the inlet vapour, while the excess area eventually is covered with false air. Cases are known in which the capacity of systems has been 30% under the expected capacity and where it was possible to improve the capacity by throttling the inlet of vapour to the heat transmission bodies that function under the worst conditions for heat transmission, but it is difficult to get the right distribution of the vapour.

As already mentioned, this problem is solved by dividing the rotating evaporation body into sections with serial flow for vapour and condensate. The circular ring channel evaporation bodies are formed by two plane plate rings which are connected at the periphery, either by means of an intermediate ring whose width gives a suitable cross-sectional area for the circular vapour flow, or by providing the plates along their periphery with bendings facing each other and providing together the necessary distance between the plates. With the latter approach only one circular welding is required to connect the plates, and if the ring channels are to be connected to each other in the same way via a single welding, the plates must be provided with a bending extending outward towards the adjacent ring channels and have a size that allows room between the evaporation surfaces for a brushing-scraping arrangement. Alternatively, the ring channels can be connected by means of rings which have a width that also provides the necessary distance between the evaporation surfaces.

Vapour is used as a heat medium, and the tubular mid-section is axially divided into sections which each form the basis for such a number of ring channels that the desired flow rate for the vapour's parallel flow through the ring channels connected to the section is obtained. In assembling with the next section, this is turned 180° so that the inlet channel is coupled to the outlet channel from the preceding section. The number of ring channels in the following section must be reduced corresponding to the vapour volume condensed in the preceding section.

The evaporation body rotates with a speed not higher than that which allows the condensate to be collected at the bottom of the ring channels until the radial partition wall passes and lifts it upwards. When the partition wall has gone up in the horizontal position, the condensate begins to run into the outlet channel and continues on to the next section, where the inlet openings for the ring channels of this section at the same time approach the bottom position, where the condensate can flow in for a further transport, together with the condensate formed in the section. In case the ring channels are e.g. placed with a division of 45 mm, 22 ring channels per m of rotor can be placed, and with an external diameter of 2,5 m and a ring-shaped mid-section with a diameter of 1,2 m, each ring channel will have a surface of about 7,5 m² and thus an area per m of rotor length of about 160 m². It is thus possible to obtain a large evaporation capacity, even if the dimensioning is based on small temperature and pressure differences, and such an apparatus will be suited for operation with a heat pump or another corresponding economical operation.

Even if one operates with a limited pressure difference over the heat transmission surface, a plane heat surface without stays will require execution in plates with a large material thickness, and the ring channel plates are therefore strengthened with a suitable number of stays.

Such a preparation and connection of the ring channels with a constant distance between the evaporation surfaces from the periphery and into the tubular supporting mid-section is the reason that an effective brushing-scraping arrangement can be produced in a very simple way.

With known embodiments of apparatus with scrapers which sweep the entire surface perpendicular to the direction of movement of the surface, the integrally formed scrapers can disturb both the vapour and the liquid flows, and at the same time it can be difficult to remove the scraped-off material.

Experience shows that in the worse case, it can take several minutes to form deposits which give a noticeable reduction of the heat transmission, and it will therefore be sufficient to establish a periodic cleaning of the evaporation surface. Such a cleaning can be performed by using small brushes or scrapers that clean the entire surface by continually moving these from the periphery towards the center and back. Since the distance between the opposing evaporation surfaces is constant everywhere, each movement means, formed with a two-sided brushing or scraping arrangement, can serve two surfaces at the same time. The brushing or scraping pressures are in balance and thus there is no side influence on the pendulum arms that activate the movement, and which therefore can have so limited dimensions that they can only disturb the liquid and vapour flows to a small extent.

The simplest and cheapest execution is obtained in an apparatus if the moistening of the evaporation surface can be performed by maintaining a liquid level in the housing slightly above the underside of the supporting mid-section. During the rotation, the evaporation body, while it is dipped in the liquid, will take up a liquid film that is sufficient to cover the evaporation taking place, while the evaporation surface will be above the liquid surface during rotation.

With such a construction, there will, however, be a long residence time in the apparatus from when the product is fed into the apparatus until it is discharged again as a concentrate, but if the treated product is damaged by a long residence time in the apparatus, the evaporation surface can be moistened by means of a liquid applying system as described in Danish patent No. 120843, December 1971. Only a limited amount of liquid will thus be required in the apparatus, and the residence time will be short.

When evaporating solutions in which the liquid phase is a mixture of liquids with different boiling points and where the most important function is to obtain an effective stripping of the easily evaporated liquid phase, it is necessary during the evaporation to create contact between the liquid and the vapour produced, which can be obtained by atomizing the solution by means of an atomizing system as described in EP patent No. 0494154.

It is hereby necessary that the rotating evaporation body is mounted so high over the atomizer system that the necessary contact between the liquid and the vapour can take place during the flinging out of liquid for moistening of the evaporation surface. In order to avoid carrying along the drops, the free cross section in the apparatus, through which the developed vapour can flow in countercurrent with the simultaneous axial movement of the liquid toward the residue outlet, must be so large that the flow rate of the vapour does not exceed about 1 m/s. During the passage of the liquid from the liquid inlet to the outlet for the stripped liquid, this must be thrown out again at least as many times as corresponding to the necessary number of bottoms for the stripping.

### DRYING

When drying a product from a fluid to a powdered condition, spray drying is a widely used method, although the system in certain respects has undesired characteristics in its function, partly in the form of a high energy consumption with indirect heat transfer by means of air and partly in that the emitted air can cause odour problems. The energy consumption will thus often be as much as twice the heat of evaporation of the moisture removed.

Drying systems with rotating plate ring channels with a horizontal axis can function with a vapour consumption with direct contact heat transfer which is reduced to about 1.1 times the vapour produced, but the consistency of some products during the transition from liquid to solid condition can cause large problems of sticking of the product to the ring channels, so that a back mixing with some of the finished dry product must be performed in a ratio so that the apparatus can function without problems. However, the method gives a greatly increased residence time for the product in the apparatus and at the same time a somewhat poorer heat transmission coefficient and therefore does not always provide an acceptable solution.

An apparatus which provides a gentle drying is the drum dryer, which has a rotating cylindrical vapour-heated drum. The liquid product is added to the drum in a layer of a fraction of a mm, and the dried product is scraped off before the drum has performed a full revolution and as close to the liquid application arrangement as possible. The residence time of the product on the heating surface is a few seconds. By building the drum into an airtight housing, it is possible to work with the most advantageous drying temperature for the product. A disadvantage of the system is that it requires much space and that the production of the drum must be performed with great precision to obtain a sufficiently precise application and scraping off of the product.

The heat transmission body already described above can be used in an embodiment adapted to the purpose for drying liquid products and can function according to the same principle as the rotating drum. For this use, the heat transmission body is mounted with a vertical axle of rotation, whereby the heat transmission surface is horizontal and thereby enabling the application of the viscous product in a significantly thicker layer. As a result, the requirement for precise production of the surface is reduced, since it is easier to scrape off a thicker layer. If the product is applied e.g. in a layer thickness of about 4 mm and the temperature difference is limited to about 30°C, the drying time, which is strongly dependent upon the dry matter content and consistency, will be about 1 hour. The distance between the individual ring channels must be large enough to provide room for the aggregates for applying and scraping off the product, but it is possible to establish a large number of heat transferring surfaces on a single rotor. In this situation, an application and scraping off for each revolution of the rotor would require a very large number of application and scraping aggregates. The apparatus is therefore constructed so that each application aggregate and each scraping aggregate serves a large number of ring channels, e.g. 10 circular heat transferring surfaces that rotate with about 10 revolutions per hour. The apparatus can e.g. have 40 ring channels and thus 4 application and scraping systems. The system functions such that each of the e.g. 4 liquid application nozzles are mounted on a common motion system that gives the nozzles a pendulum movement and gradually during a whole revolution applies moist product to the corresponding surfaces. Thereafter the nozzles turn completely free of the surfaces and are raised or lowered to the next set of surfaces. The scraping system has its own motion system which serves the same surfaces. The scraping of a set of surfaces starts sufficiently before the liquid application begins that the areas between the scrapers and the liquid nozzles are scraped clean before the application begins. When the heat transmission body is turned an entire revolution, the scrapers are moved to the subsequent set of surfaces. The scraping system is followed by the application system, and as soon as the surface between the two systems is clean, the application of moist products can begin. The advantage is hereby obtained that only at the set of surfaces being scraped off and applied new product does an area exist which is not coated and therefore inactive, whereas the other 9 sets of surfaces are completely covered and thus fully active.

The scrapers are moved in a pendulum movement from the mid-section of the heat transmission body and past the periphery of the surfaces. During the return the scrapers are lifted to such an extent that they do not contact the dried product. The heat transmission with the significantly thicker product layer is somewhat less efficient than with drum drying apparatus, but with the same external dimensions of the apparatus the heat transferring area is on the other hand much greater. A rotor with 10 ring channels per m with a height of 4 m, a diameter of 2.5 m and a mid-section of 1.2 m will have a contact area of 150 m², and the corresponding area on the underside of the ring channels contributes with radiant heat. A corresponding cylindrical drum with a diameter of 2.5 m and a length of 4 m will have a contact area of 31.5 m².

It is thus possible to establish such a large evaporation surface that one can operate with a temperature and pressure difference so low that the heat pump system can be used with an operating economy advantage, which can be illustrated with a calculated example of e.g. use for drying waste water sludge. A widely used method for drying waste water sludge is drying by means of air which is heated by direct combustion of oil or gas in the beginning and then by combustion of the dried sludge. In drying one ton of sludge with a dry matter content of 15% to 176 kg with 85% dry matter, 824 kg of water must be evaporated with a heat consumption of at least 824 x 600 kcal = 494,400 kcal/ton. The combustion of 176 kg of dry matter with a combustion value of about 3000 kcal/kg = 528,000 kcal/ton, with a heat surplus of 33,600 kcal/ton, corresponding to about 60 kg of vapour. With a heat pump, the theoretical power consumption with adiabatic compression of the produced vapour will be about 43 kw and with a 70% efficiency of the compressor a power consumption of 61.5 kw, which with an efficiency of 40% by electricity production requires a heat consumption of (61.5 x 860): 0.4 = 132,225 kcal/ton, and there will consequently be a heat surplus of 528,000 - 132,225 = 395,775 kcal, corresponding to about 660 kg of vapour per drying of 1 ton of 15% sludge, and thus an appreciable improvement of the operating economy is obtained.

The invention is described in more detail in the following with reference to the drawings, in which:

Figure 1 shows a longitudinal section in a basis model.

Figure 2 is a cross section in a basis model.

Figure 3 is a cross section in an evaporation body rotor turned 45° in relation to figure 2.

Figure 4 is a longitudinal section in a single section before welding together of adjacent sections.

Figure 5 is a cross section in a single section showing the welding joint between the circular plate channels and the tubular mid-section.

Figure shows 6 the shape of a single ring channel with plates connected via an intermediate ring.

Figure 7 shows the shape of a single ring channel with plates connected via bent edges.

Figure 8 shows details of a scraping-brushing arrangement.

Figure 9 is a cross section in the last section of the evaporation body with an outlet for condensate and false air.

Figure 10 shows the same cross section turned forward 45°.

Figure 11 is an isometric sketch of a flow course in an evaporation body.

Figure 12 shows an arrangement for reducing residence time in the apparatus by spraying liquid on the heating surface.

Figure 13 is a longitudinal section in the apparatus adapted for stripping an easily evaporable liquid phase.

Figure 14 is a cross section of the same.

Figure 15 is a vertical section in a drying apparatus.

Figure 16 is a horizontal section in the same.

Figure 17 is a vertical section in the motion system.

Figure 18 shows an arrangement of a product application system.

### EVAPORATION

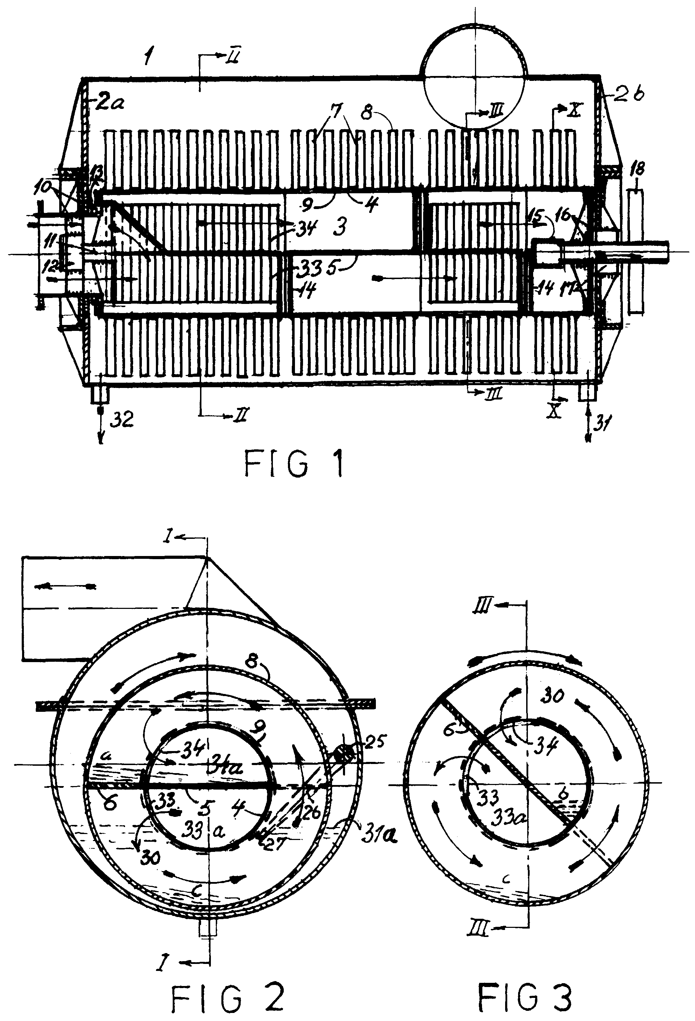

Figure 1 shows the basic evaporation model, in which the rotating evaporation body 3 is mounted with a small distance between the periphery 8 and the bottom of the cylindrical housing 1 of the evaporation apparatus. The heat transmission surface 7 is moistened by the product being evaporated having its surface 31a above the underside 9 of the connection between subsequent ring channels. The addition of heating vapour goes through inlet pipes with flange 10, which at the flange connection is connected to the end cover 2a. The inlet pipe is connected via the lip sealing arrangement 13 to the rotating evaporation body 3, which is supported through the axle neck 11 by the bearing 12, which is held in place in the inlet pipe 10 by means of stays.

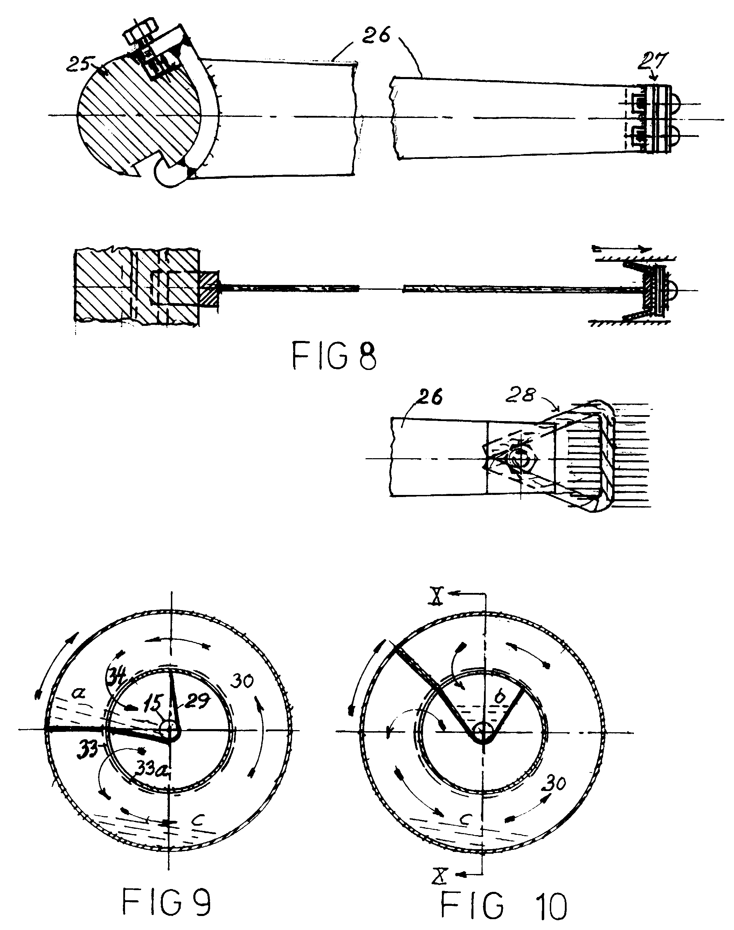

At the opposite end of the evaporation body, it is supported by the hollow axle neck 16, which via a flange arrangement is connected to the tubular mid-section 4 of the evaporation body. The hollow axle neck 16 is disposed in the bearing 17 which is fixed through a flange connection to the end cover 2b of the apparatus. The hollow axle neck 16, together with the collecting arrangement shown in figures 9 and 10, numbers 15 and 29, form an outlet for condensate and false air as well as possibly a small excess of vapour for expelling the false air.

The system that receives the condensate, etc. is not shown, but it is coupled to the hollow axle neck 16 either via a mechanical axle sealing or a lip sealing.

The force for rotation of the evaporation body is transferred e.g. via a sprocket wheel 18 mounted on the axle neck 16. The evaporation body is rotated at a speed of 10-15 rpm and must therefore be driven via a gear with a large gear ratio, which is not shown.

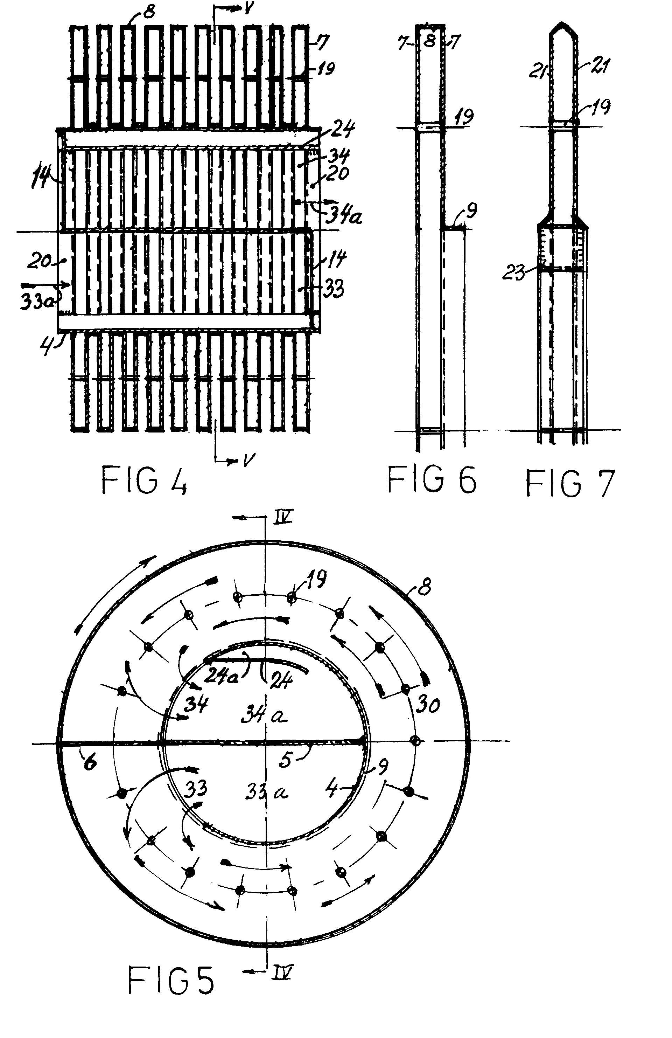

To obtain the best possible heat transmission by condensation of the vapour in the ring channels in the evaporation body 3, this is divided into sections, of which one is shown in figures 4 and 5. The sections are constructed with a number of ring channels suited to the placement in the evaporation body, formed either as shown in figures 6 or 7. Figure 4 is based on the construction shown in figure 6.

Each individual ring channel consists of two plate rings 7, which are welded together along the periphery by means of the intermediate ring 8. The material thickness of the plate rings 7 and the number of stays 19 is calculated in accordance with the desired operating conditions for temperature and pressure difference. The width of the intermediate ring 8 is chosen so that there is a sufficient cross-sectional area for the vapour flow in the passage 30, figure 5. The radial partition wall 6 which extends from the mid-section to the periphery of the ring channels leads the vapour from the inflow opening 33 through the passage 30 to the outlet opening 34. The partition wall 6 is connected to the diametrical partition wall 5, which divides the tubular mid-section into two half-tube-shaped inlet and outlet channels, respectively. The vapour which has not yet condensed and the condensate are forced to pass through the ring channels, since the inlet channel 33a is closed with a plate 14 at the connection to the subsequent section. This is turned 180° in relation to the previous section, and vapour and condensate will therefore continue directly into its inlet channel 34a and further around in the ring channels of the section.

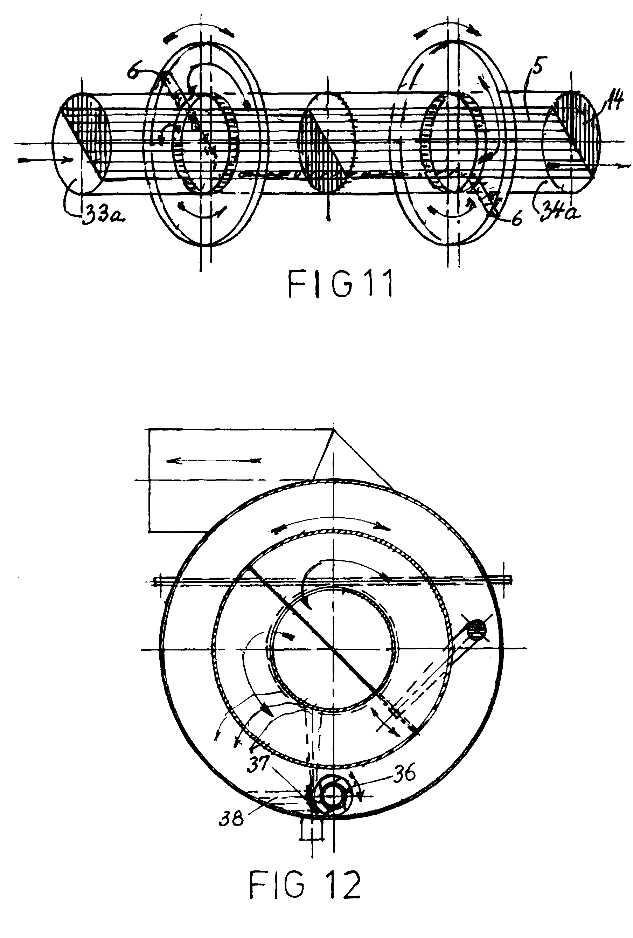

The passage of the condensate through the evaporation body is best illustrated by the isometric image of figure 11, which, however, for the sake of simplicity only shows 1 ring channel per section. The partition wall 6 serves not only to lead the vapour but also to lift the condensate up so that it is caused to flow further to the next section by means of gravity. The condensate (c) will be collected in the bottom part of the ring channel, where it in relation to the ring channel flows against its direction of movement, until the partition wall 6 passes its bottom position and brings the condensate (c), figure 2, upwards, and the partition wall 6 approaches its horizontal position where the outlet of the condensate (a), figure 2, through the outlet opening 34 can begin. The outlet can continue until the partition wall 6 passes the vertical upwardly facing position, and the condensate will flow across the diametrical partition plate 5 and be collected in the corner (b), figure 3, between the partition plate and the tube wall 4, where it can flow further to the next section, whose inlet openings 34 at the same time are approaching the bottom position, and the condensate can flow directly into the ring channels of this section.

The dimensioning of the total cross-sectional area of a section's ring channels is based on the vapour volume that will be condensed in this section and subsequent sections, and it will be possible to dimension so that, with the exception of the last section, a vapour flow rate that results in an optimal heat transmission can be obtained everywhere.

When the evaporation takes place under vacuum, the specific vapour volume can be so large that the ring channels in the first section must be constructed with a sufficiently large distance between the plates 7 that the volumetric utilization of the total volume of the apparatus becomes too small, which can be avoided be constructing the first sections so that they operate in parallel and thereby allow a distance between the plates 7 to be significantly reduced. The condensate from the first part of this double section can, however, have difficulty reaching the next series-connected section before the outlet openings 34 have reached the bottommost position, where a residual amount of condensate will run back into the ring channels in countercurrent to the vapour stream, and thereby give increased flow resistance. This adverse effect can be remedied by providing the outlet channel with a collecting pocket 24a which is formed by the plate 24, figures 4 and 5. The plate is at the foremost end of the section connected to the barrier plate 14 but is open to the subsequent section. Condensate which has not reached the next section is taken into the collection pocket, from which it will flow on to the next section during the continued axial rotation of the evaporation body. A complete emptying of the pocket will take place when the next portion of condensate flows out of the outlet opening 34.

The production of the individual sections of the evaporation body starts with the production of the individual ring channels, either as shown in figure 6 or in figure 7. The width of the rings 8 and 9, figure 6, depends on how large the through-flow area in the ring channel must be and partly on how much room the brushing-scraping arrangement in the intermediate space requires, or whether extra space for discharge of the produced vapour is required for the evaporation of foaming solutions. After the assembling of the plates 7, figure 6, or 21, figure 7, along the periphery and staying with the necessary number of stays 19, one should ensure when welding these together that the distance between the plates is the same everywhere.

After grinding the welds of the stays and the partition walls 6, the individual ring channels are leak and pressure tested. Afterwards the ring channels connected to the same section are welded together. The welding is performed from within the center, and a minimum distance between the ring channels is therefore not required, since, as mentioned above, only the function of the evaporation body and not the accessibility of the welds determines the dimensions of the apparatus. The imperviousness of the welding together of the ring channels can then be tested before assembly with the tubular mid-section 4 which forms an inner wall in a part of the inner circumference of the ring channels and therefore does not cover the approximately 110° which together is taken up by the inlet and outlet openings 33 and 34.

The mid-section 4 is welded to the intermediate rings 9 of the ring channels, or by ring channels as shown in figure 7, where the mid-section 4 is welded to the connecting plates 23. During the welding, the cylindrical shaped mid-section 4 is pressed out towards the ring channels, and on the portion of the plate cylinder 4 extending outside the outermost plate rings 7, the missing part of the circumference is filled out with the cylindrical shaped plate pieces 20, figure 4, and hereafter the two outermost plate rings can be welded to the supporting mid-section. Finally, the diametrical partition plate 5 and the semicircular shaped barrier plates 14 are mounted. The welding together of the individual sections takes place with an outwardly turned v-joint, which can be performed with the shortest possible distance between the adjacent ring channels, so that the whole construction can be regarded as being particularly space saving.

The heat transfer through the heat transmission surface depends only on the chosen material and the wall thickness of the plate, and the function can here be optimized by finding the best possible ratio between wall thickness of the heating surface and the number of stays 19 for uptake of the pressure difference.

When evaporating solutions with increasing viscosity, it will normally be the heat transition from the heat transmission surface to the boiling liquid which gives the greatest resistance in heat transmission, and especially if deposits are formed on the evaporation surface, heat transfer can be reduced very significantly. In this situation, apparatus or systems which in a simple and efficient way keep the evaporation surface free of deposits can contribute to making the process more efficient.

As mentioned, by using scrapers that clean the entire surface with each revolution of a stirrer with a connected scraper, difficulties can arise in removing the scraped-off material, and in certain embodiments scrapers give hindrance to the outflow of the vapour produced. The present invention has developed a system whereby the evaporator surface is scraped or brushed off periodically. The system is partly based on the rotation of the evaporation body and partly on the scrapers or brushes having a small size, but through a pendulum movement they are brought to act on the entire surface.

The mode of action of the cleaning system is based on establishing a set of scrapers or brushes for each intermediate space between the ring channels, and a preferred embodiment for cleaning two opposing surfaces is shown in figure 8, and in figure 2 the placement in relation to the rotating evaporation body and the cylindrical housing is shown. The scraping arrangement 27, or the brushing arrangement 28, shows only one of numerous possibilities for designing these arrangements, they are mounted at the end of the pendulum arm 26 which is fixed to the axle 25 by a fixing arrangement. Through its reciprocating rotational movements, the arm 26 provides the desired pendulum movement. The axle 25 extends through the entire length of the apparatus and is journaled in the end covers 2a and 2b and is led out through a stuffing box in one end and connected to a drive system, not shown, in which a lever is activated, either via a crank system or a double action hydraulic cylinder. The necessary pressure of the brushes or the scrapers on the evaporation surface comes from the pressure from the opposing plate, and the pressure will be constant under the entire pendulum movement from the mid-section to the periphery of the evaporation body, and since the pendulum arm 26 thus is not influenced by side forces, it can be produced from a thin plate. As a result of the fact that the system can be produced with limited dimensions, the effect on the liquid and vapour flows will be limited, and as a result of the pendulum movement, the material V which is removed from the heating surface will not have the possibility to form a large accumulation.

The energy consumption with drying processes is significantly larger than with evaporation of solutions from a fluid state, and it can therefore be an advantage to use the present system with constant cleaning of the evaporation surface, and with the accompanying possibility to obtain a higher dry matter concentration in the residue, also when evaporating solutions that do not have a tendency to form deposits, but thereby saving on energy consumption in a subsequent drying process.

In a construction as shown in figures 1 and 2, moistening of the evaporation surface takes place as a consequence of the liquid level in the apparatus being high enough so that every part of the evaporation body moves below the liquid surface during rotation, and even though the volume utilization of the evaporation body is good and the evaporation capacity is large, the residence time of the liquid in the apparatus will be relatively long. This residence time, from when the solution is led into the apparatus until it is taken out as a concentrate, can, however, be reduced significantly in a partially known manner. There are two methods to choose between, depending on the product to be evaporated and the purpose of the evaporation.

With products in which the liquid phase only consists of a single component, an arrangement as shown in figure 12 will be sufficient. The evaporation body is constructed as shown in figures 1 and 2 with corresponding inlet for vapour and outlet for condensate, but with the evaporation body placed such that there is room underneath it for installing a spraying rotor 36 which throws the liquid up towards the evaporation body by means of gripping plates. The construction is a further development of details in Danish patent No. 120843, the embodiment being simplified and the function being improved by controlling the direction of the liquid stream using a guide screen 37 which together with the housing wall 1 forms an open channel 38 from which liquid can flow to the spraying rotor, which throws the liquid up towards the evaporation body. The greater part of the liquid will immediately run back to the channel to be thrown up again, and a smaller part will stick to the heating surface and follow it around while at the same time evaporation and concentration takes place. Through the scraping and the subsequent spraying of the liquid, the liquid film on the heating surface will be renewed and the part with slightly increased concentration will return to the channel 38, from which the liquid will again be thrown up against the evaporation body slightly closer to the concentrate outlet as a result of the superimposed axial flow in the channel.

When the liquid phase has only one component, the produced vapour will be uniform throughout the entire apparatus and there will be no need to establish a countercurrent between the liquid and vapour currents. By placing the vapour outlet in the center of the apparatus, a saving in the outer dimensions of the apparatus can thus be obtained.

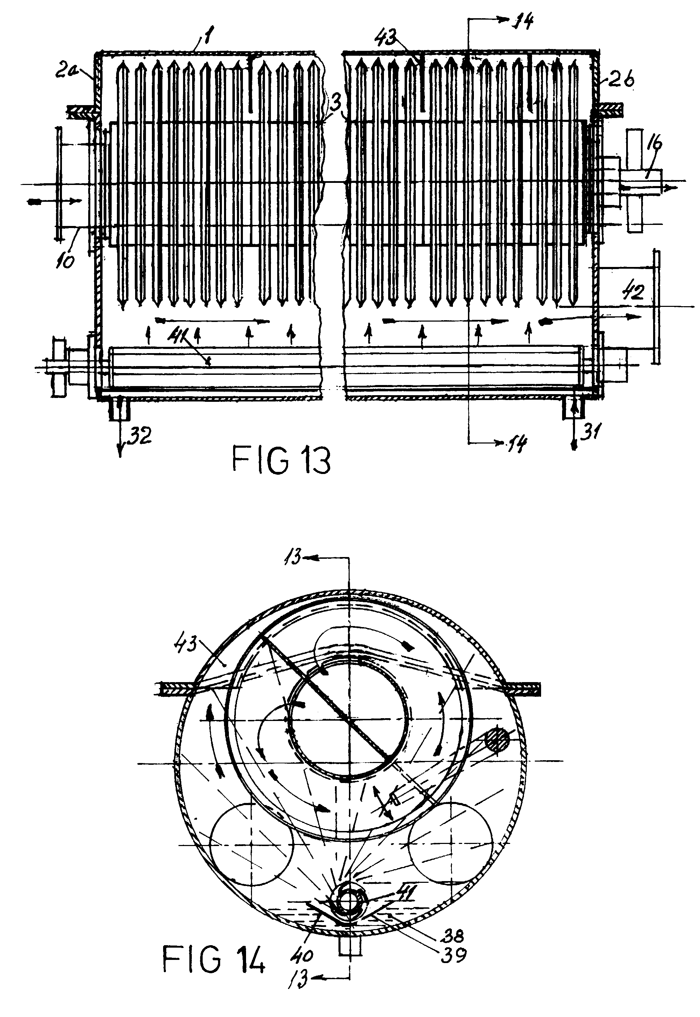

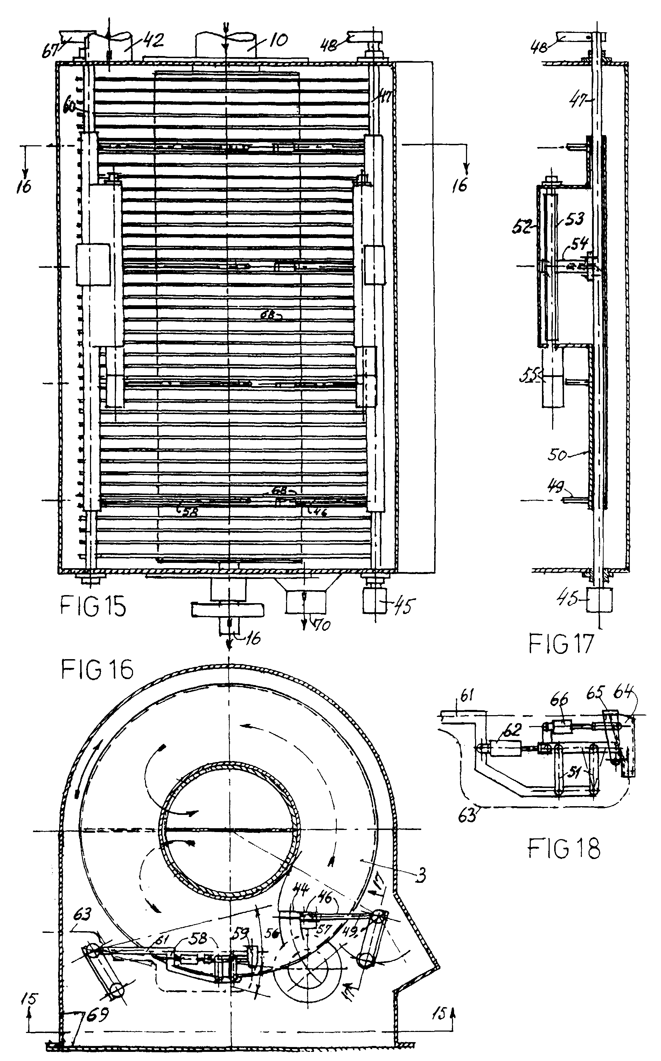

With products in which the liquid phase is a mixture of liquids with different boiling points and where it is desired at the same time to have a nearly complete stripping of the most easily evaporable phase, this can be obtained with an embodiment as shown in figures 13 and 14.

The evaporation body is produced as described in connection with figures 1 and 2, but it is placed as high as possible close to the top of the horizontal cylindrical housing and with a distance to an atomizer rotor 41 at the bottom of the housing which gives the possibility to obtain the necessary contact between the developed vapour flowing towards the outlet 42 and the liquid which is thrown up towards the evaporation body and the walls of the housing. The speed of the axial vapour flow should not exceed about 1 m/s, and these two factors therefore together determine the diameter of the cylindrical housing.

The liquid atomizing system functions and is manufactured as described in EPO patent No. 0497154 and is as described adapted to throw liquid in a fan which covers the entire free cross-sectional area of the apparatus, so that the vapour obtains the necessary contact with the liquid during the axial flow towards the outlet 42. The atomizer system as shown in figure 14 consists of a rotor 41, which has a tubular supporting part, provided with a number of forward facing blades which at the angular bent back edge are welded to the supporting mid-section. Collection chambers opening forwards in the direction of movement of the rotor are hereby formed. When the blade of the rotor passes the slot between the two guide plates 39 and 40, the liquid which has flowed forward through the slot will be collected by the passing blade and then, by engaging the bottom of the collecting chamber, will be brought up to the rotational speed of the rotor, and the liquid will then be thrown out by centrifugal force over the front edge of the blade.

One can ensure that all the liquid is thrown out in a uniform fan over the entire free cross-sectional area by adapting the depth of the collection chamber and the inclination of the blade in relation to its direction of movement. The absolute speed at which the liquid is thrown out from the rotor is the vectorial sum of the flow speed of the liquid in relation to the blade and the peripheral speed of the rotor.

During the liquid's axial movement from the inlet 31 to the concentrate outlet 32, the liquid must be thrown out, and after striking the evaporation body and the housing wall it will flow back for renewed spraying out a number of times in proportion to the theoretical number of bottoms necessary to obtain the desired stripping.

If the atomizer rotor e.g. works with a rotational speed of 7 rpm and there are 6 blades on the rotor, 42 streams per second will be thrown out. With an apparatus length of e.g. 4 m and a free cross-sectional area which gives the vapour a flow speed of 1 m/s, there will thus be a possibility for the vapour to come into contact with a new liquid spray 168 times during the passage through the apparatus.

As it appears from figure 14, there is a small area in the upper part of the apparatus which the liquid spray does not reach as result of striking the mid-section of the evaporation body, and barrier plates 43 are therefore disposed so that the vapour only flows where it can come into contact with the liquid spray.

The outlet 42 for the vapour given off by the evaporation as well as the inlet 31 for the solution and the outlet 32 for the residue are placed so that the two axial flows of vapour and liquid go in countercurrent, which is a prerequisite for the desired stripping effect.

During the throwing of the liquid, the liquid impact on the evaporation body and housing wall and the return flow of the liquid for renewed throwing by the atomizing system, a certain back mixing of liquid will take place, which results in the dry matter concentration of the liquid being slightly higher than that which is theoretically possible. By designing the apparatus with the necessary evaporation body length, the effect of the back mixing of the liquid will be reduced and the average heat transmission will be close to that which is optimally obtainable.

### DRYING

Figure 15 shows an apparatus for drying of pumpable products, in which the rotating evaporation body 3 is mounted with a vertical axis. The design of the bearing of the rotor and of the inlet for the heat medium and the outlet for condensate and non-condensable gasses corresponds to the construction described in connection with figures 1 and 2. As a result of the surfaces of the ring channels being horizontal, it is possible to apply the product in a thick layer, and on the heating side the condensate can run to the outlet opening 34, figure 2, without activation with the partition wall 6, figure 2, which must hereby only lead the vapour through the ring channels. The special arrangement for removal of the condensate shown in figures 9 and 10 can be replaced by a simple partition plate as in the other sections, offset, however, enough so that the discharge through the hollow axle neck 16 is not hindered.

Since it is possible to produce a heat transmission body with many circular heat surfaces, and since the drying time for a thick product layer is long, it is advantageous to let a liquid application aggregate and a jointly running scraping aggregate treat several heat surfaces. Figure 15 shows an apparatus with a total of 40 heat surfaces which function with 4 application and scraping aggregates that are activated by their own motion systems, but which have the same construction and function in the same way. With 10 plates served by the same set of aggregates and where the drying time is 1 hour, the heat transmission body must rotate with a speed of 10 revolutions per hour, and in the course of 1 revolution 1 plate from each of 4 jointly running plates is scraped off and applied new moist product. The motion system for the scraping function, shown in figure 17, must give the scraping aggregate 46 a pendulum movement where the scraping takes place, while the scraping knife 44 is moved from its position closest to the mid-section of the rotor on the line connecting the axes of the motion aggregate and the rotor, and the scraper thus comes close to the circular mid-section under its movement to end outside of the periphery of the rotor, where the powder can freely fall down towards the powder outlet. During the motion of the scrapers back to the start position, the scraping knives 44 are lifted free of the powder layer by means of a hydraulic lifting aggregate 45, figure 17, which again lowers the knives before the next scraping movement begins.

The lifting aggregate can be carried out in many different ways and is therefore only shown symbolically. Activation of the scraping aggregates 46 can be performed in several different ways. With the construction shown in figure 17, the pendulum movement is activated by giving the axle 47 a reciprocating rotational movement of about 70° activated via a lever 48 of a crank or hydraulic system, not shown. The pendulum arms 49 of the scraping aggregates are connected to a common pipe 50 which can be axially displaced in relation to the axle 47. The pipe has an extension 52 in which a spindle 53 is disposed with a thread engaged by the internal thread in the arm 54 fixed to the axle 47. The spindle is driven by a motor with a gear arrangement 55 that can be activated when the scraping aggregates 46 are to be lifted or lowered for scraping of the next heating surface. The spindle 53 and the arm 54 have a double function of both transferring the moment of the pendulum movement and raising or lowering the scraping aggregates 46 in moving to the next set of heating surfaces. The positioning of the scraping aggregates 46 at the right height in relation to the surfaces from which the dried product is to be removed can e.g. take place by the arm 54 being provided with a slide contact which makes contact with contact points aligned with each of the 10 functional positions in this example. Upon contact the spindle motor 55 can be stopped and the scraping function at the same time started, and after a full revolution of the heat transmission body 3 a signal is given to stop the pendulum movement and to start the spindle motor, which stops again when the motion system has reached the next functional position.

This control function can take place with adapted standard equipment and is therefore not shown. The scraping aggregate 46, figure 16, is composed of a scraping knife 44 built together with a back wall that ensures that the loosened material is pushed forward over the periphery of the heating surface. The scraping knife is at its sides connected with side plates that are parts of cylinders whose center is in the axis of the pendulum movement. The outermost plate 56 follows the surface of the heating surface, and the innermost plate 57 extends down to the surface of the dried product. The side plates prevent the material that has been scraped loose from being spread out to the sides.

Turning of the heating surfaces would be very expensive, and the scraping knives are therefore coupled to the pendulum arms 49 by means of sets of parallel pivot arms which allow a vertical movement of the scraping knives while the knife edge is still parallel with the plane of the heating surface. The knife's vertical movement is limited by stops, so that the knife can only be moved as much as corresponding to compensation for the largest deviation of the heat surfaces from the plane surface. The scraping knives are pressed against the heating surfaces by means of adjustable springs with a pressure that is adapted to the consistency of the product. The construction of this system is not shown in detail.

Application of the liquid product on the heat transmission surface is performed by pumping the product in through flexible hoses 63 to flat nozzles 59 and distributing it evenly on the heating surfaces by moving the nozzles back and forth from the mid-section of the rotor and out to a suitable distance from the periphery of the circular heat surface and back, with the rotor simultaneously revolving.

The pendulum movement and the lifting or lowering of the application aggregates 58 to the next set of heating surfaces is carried out with the same construction of the motion system as shown in figure 17, but the reciprocating rotational movement is in this case only about 20°, since the nozzles 59 must not apply the product too close to the periphery of the heating surface.

When the application aggregates 58 are to be raised or lowered for applying product to the next set of heat surfaces, the axle 60 is turned a further approximately 10° so that the application aggregate is free of the heating surface, which e.g. can be performed by moving the attack point for the hydraulic cylinder that activates the pendulum movement a corresponding number of degrees with an extra hydraulic cylinder. To obtain the best distribution of the product on the heating surfaces, the nozzles 59 are mounted so that the distance to the axle for the pendulum movement can be changed, which can be established by coupling the nozzles to the pendulum arms 61, figure 18, by means of a double set of parallel pivot arms 51 that allow the nozzle to be moved back and forward in relation to the longitudinal axis of the pendulum arm. The system functions such that when the nozzles 59 are closest to the mid-section of the heating surface, the pneumatic cylinder 62 moves the nozzle forward towards the direction of revolution of the heating surface with a displacement that corresponds to the width of the flat nozzle. A double layer of product on the heating surface is hereby avoided. During movement out towards the periphery, the nozzles must be gradually pulled back to the position closest to the axis of rotation of the pendulum movement, so that the nozzles at the periphery can again be moved forward to also avoid a double layer on this part of the heating surface.

The conveying speed at the surface of the heating surface increases proportionally with the distance from the axis of rotation of the heat transmission body, and during a single pendulum movement areas near the periphery will have moved about twice as far as the area by the mid-section, which results partly in the nozzles at the periphery having to be moved twice as far as by the mid-section, and partly in the pumps that supply the product having to deliver a product amount that increases proportionally with the distance of the nozzle from the axis of rotation.

If the nozzle e.g has a width of 40 mm, it will cover 80 mm per pendulum movement at the mid-section, and with a diameter of 1200 mm, 1200 x π : 80 = 47 strokes per revolution of the heating body are required, in other words 47 x 10 : 60 = about 8 strokes per minute. At the periphery with a diameter of about 2400 mm, the surface will rotate forward 2400 x π : 47 = 160 mm, and if the layer that is twice as thick does not expand by itself over the intermediate spaces, the nozzles must deliver the product with a width of 80 mm, which is possible with the construction shown in figure 18. The nozzle 64 has a width that corresponds to full coverage of the heating surface at the periphery. It is provided with a pivoting slide valve 65 that by means of a hydraulic cylinder 66 can adapt the width of the outlet opening such that when the nozzle is in its innermost position, only about half of the nozzle opening will be covered, and it will be completely open in its outermost position. The hydraulic cylinder 66 can e.g. be activated with a cylinder whose piston moves out and in and is controlled by the external lever 67 of the pendulum movement.

The scraping and application aggregates that together serve the entire heat transmission system are each activated by its own common motion system, and it is therefore necessary that the distance between the surfaces 68 of the heating surfaces is constant regardless of whether the heating surfaces are inside one of the ring channel sections or adjacent the connection between two sections.

The heat transmission at the heating surfaces that have common scraping and application aggregates represents the entire interval from the best heat transmission with newly applied product to the lowest heat transmission where the product is already dried, and it is therefore important that only as many ring channels are coupled together in parallel in a single ring channel section, figure 4, to obtain the optional vapour supply in all of the ring channels. If it is a problem to obtain the optimal vapour supply to the heating surfaces closest to the condensation outlet, the system has the advantage that the product inlet pump that supplies that part can be adjusted to reduced capacity.

As mentioned, it is possible with the developed construction of the heat transmission body and the systems for applying the moist product and removing the dried product to complete the process with such small temperature and pressure differences that heat pumps can advantageously be used for recompression of the produced vapour, and a particularly good operating economy in the drying process can thereby be obtained. It is hereby necessary that the housing 69 is air tight, and even though the construction of the heat transmission body gives an effective concentration and discharge of air together with the condensate to the hollow axle 16, air sucked together with vapour will reduce the heat transmission and in the worst case stop the operation. The heat pump is connected to the vapour outlet 42, figure 15, and after compression the compressed vapour is led to the heat transmission body through the vapour inlet 10. The moist product is pumped through the flexible hoses 63, and the dried product is led out through the powder outlet 70.

## Claims

1. A rotatable hollow heat transmission body (3) for use with a mainly horizontal axis of rotation in an apparatus for evaporating mixtures of liquids or of solutions with a tendency to form deposits or for use with a mainly vertical axis of rotation in an apparatus for drying of pumpable products, which liquids or solutions or pumpable products can be applied to an outer heat transmission surface (7) of the heat transmission body (3) from which deposits or dried product can be scraped off during rotation of the heat transmission body, in which the rotating heat transmission body (3) comprises:
- a hollow drive axle (16) for rotatable mounting in a housing (1) of the apparatus,
- means (10, 13) for supplying the heat medium in the form of vapour to the internal heat transmission surface of the heat transmission body (3),
- means for leading condensate and false air from the interior of the heat transmission body (3) through the hollow drive axle (16),
- longitudinal sections into which the hollow evaporation body (3) is divided and whose axial lengths are dimensioned in relation to each other such that for a given flow of condensed vapour through the body the most advantageous flow speed is obtained for the heat transmission from the heat transmission surface of the heat transmission body (3),
each longitudinal section comprising:
- a tubular supporting mid-section that by means of a diametrically running partition plate (5) is divided into a half-tube-shaped inlet channel (33a) for admission of the heat medium in vapour form and a half-tube-shaped outlet channel (34a) for discharge and continuous flow of vapour and condensate to subsequent longitudinal sections,
- ring channels with passages (30) for throughflow of the condensed vapour, said ring channels being disposed coaxially with and around the tubular mid-section, said ring channels having side plates (7; 21; 68) mounted on the sectionally divided tubular mid-section with a distance between adjacent side plates of two adjacent ring channels, so that between two adjacent ring channels space is provided for a scraping or brushing arrangement for removing deposits from the heat transmission surface of the heat transmission body,
- radial partition walls (6) disposed in the passages (30) of the ring channels and connected to the diametrical partition plate (5),
- inlet openings (33) in the tubular mid-section in the vicinity of a first side of the partition plate (5), said inlet openings (33) connecting the inlet channel (33a) with the passages (30),
- outlet openings (34) in the tubular mid-section in the vicinity of the other side of the partition plate (5), said outlet openings (34) connecting the outlet channel (34a) with the passages (30), and
- a semicircular radial plate (14) that closes one end of the inlet channel (33a),
and the sections being welded together such that each individual section is turned 180° in relation to the proceeding section, whereby the outlet channel (34a) of one section is connected to the inlet channel (33a) of the subsequent section.

2. A rotatable heat transmission body according to claim 1, **characterized in** that the ring channels of the heat transmission body have side plates (7; 21; 68) mounted on the sectionally divided tubular mid-section with a distance between the side plates that during use for evaporation processes provides room for a pendulum suspended brushing or scraping arrangement (25-28) or provides room during use for drying processes for product application aggregates (58) and scraping aggregates (46).

3. A rotatable heat transmission body according to claim 1 or 2 for use in an apparatus for evaporation processes, **characterized in** that the ring channels are constructed of plate rings with constant distances between surfaces of the ring channels in the intermediate spaces between them, whereby two surfaces facing each other can be kept clean by means of a common two-sided brushing or scraping arrangement (25-28) that is mounted on an arm (26) that is movably disposed in relation to the heat transmission body so that it can provide the brushing or scraping arrangement with a pendulum-like movement from the periphery of the ring channel to the mid-section and back during rotation of the heat transmission body.

4. An evaporation apparatus comprising a rotating heat transmission body according to any of the preceding claims, **characterized in** that the apparatus comprises a spraying rotor (36) for moistening the heat transmission surface of the heat transmission body (3), an open liquid channel (38) for supplying the spraying rotor so that the solution to be evaporated is at the same time between being thrown out stepwise allowed to flow from a liquid inlet of the apparatus to a concentrate outlet of the apparatus, so that the residence time of the solution in the apparatus is reduced.

5. An evaporation apparatus comprising a rotating heat transmission body according to any of the preceding claims, **characterized in** that the apparatus comprises a cylindrical housing with a mainly horizontal axis, an atomizer system (39, 40 and 41) disposed at the bottom of the housing and a vapour outlet (42), the diameter of the housing and the placement of the heat transmission body above the bottom of the housing being chosen such that between the heat transmission body and the atomizer system (39, 40, 41) a substantial free space is provided through which the liquid to be evaporated moves during passage from the atomizer system to striking the heat transmission body and the housing wall, and through which the vapour produced by evaporation at the same time flows towards the vapour outlet (42), so that together with the evaporation a stripping effect is obtained when treating mixtures of liquids with different boiling points.

6. A drying apparatus comprising a rotating heat transmission body according to any of claims 1-3, **characterized in** that the heat transmission body (3) is mounted in the housing of the apparatus with a vertical axis so that the moist pumpable product to be dried can be distributed on the horizontal upwardly facing surfaces (68) of the ring channels, the apparatus further comprising application aggregates (58) and scraping aggregates (46) for, respectively, application and scraping of product from the surfaces (68), the heat transmission body being constructed with the same constant distance between the surface (68) of a ring channel and the surface facing it of the ring channel lying above, regardless of whether the intermediate space between these surfaces is within a section or at a place where between the two surfaces there is a connection between two sections.

7. A drying apparatus according to claim 6, **characterized in** that it comprises
- a motion system for the scraping aggregates (46), the motion system comprising a pendulum axle (47), a lever (48) that activates the pendulum axle (47) to make a reciprocating rotational movement, an axially displaceable pipe (50) on the pendulum axle (47) with an extension (52), an arm (54) fixed to the pendulum axle at one end of the arm (54) and disposed in the extension (52) of the displaceable pipe (50) at its other end so that it can transfer torque to the displaceable pipe (50), a pendulum arm (49) for each set of cooperating heating surfaces of the ring channels fixed to the displaceable pipe (50) at one end of the pendulum arm (54) and at its other end to a scraping aggregate (46) and a scraping knife (44), a raising and lowering system connected to the displaceable pipe (50) so that this can be raised and lowered, as well as a lifting aggregate (45) to lift and lower the pendulum axle (47) and thus the entire motion system, and
- a motion system for the application aggregates (58) formed mainly as the motion system for the scraping aggregates (46) but without an aggregate corresponding to the lifting aggregate (45).

8. A drying apparatus according to claim 6 or 7, **characterized in** that the scraping aggregate (46) has a scraping knife (44) with a rear wall with a length in the longitudinal direction of the pendulum arm (49) allowing the entire circular heating surface (68) of a ring channel to be scraped off while it turns one revolution, and the scraping knife can be led back and forth with a pendulum movement a number of times, e.g. 40 to 50 times, and in that, in order to prevent the loosened dried product in powder form from being carried on as a result of movement of the heating surface, the scraping knife with its rear wall (44) is connected to the side plates (56, 57), the plates are cylindrical with the center in the center of the pendulum axle (47), the underside of the outermost plate (56) lies in the plane of the edge of the scraping knife, while the other plate (57) only extends down to the top side of the dried product.

9. A drying apparatus according to claim 8, **characterized in** that the scraping knives (44) are resiliently connected to the pendulum arms (49) by means of a system of parallel pivot arms, springs and stops adapted thereto.

10. A drying apparatus according to claim 6 and 7, **characterized in that** it comprises flexible hoses (63), flat nozzles (59) connected to the hoses for supplying a pumpable product to the nozzles from the hoses for distributing on the heating surfaces (68) of the heat transmission body (3), a motion system for leading the nozzles in a pendulum-like manner in and out in relation to the mid-section of the heat transmission body and back and forth in relation to the longitudinal direction of a pendulum arm (61) of the motion system, the nozzle having an outlet opening whose width is half of the movement that the periphery of the heat surfaces makes during a full movement of the nozzles, a rotatably disposed slide valve (65) for gradual blocking of a part of the outlet opening of the nozzle, the slide valves suspension being fixed to the nozzle, a first hydraulic cylinder (66) for activating the slide valve, the first cylinder's suspension being fixed to the nozzle, and the nozzle being connected by means of parallel pivot arms (51) to the pendulum arm (61), a second hydraulic cylinder (62) connected to the nozzle to displace it in a longitudinal direction of the pendulum arm, and means for regulating the capacity of the product supply pumps so that it is proportional to the distance of the nozzle orifice from the axis of rotation of the heat transmission body, thereby corresponding to the free outlet area of the nozzle exposed by the slide valve.

## Patentansprüche

1. Rotierbarer hohler Wärmeübertragungskörper (3) zur Verwendung mit einer hauptsächlich horizontalen Drehachse in einer Vorrichtung zur Verdampfung von Flüssigkeitsmischungen oder von Lösungen mit einer Neigung, Ablagerungen zu bilden, oder zur Verwendung mit einer hauptsächlich vertikalen Drehachse in einer Vorrichtung zur Trocknung von pumpfähigen Produkten, wobei die Flüssigkeiten oder Lösungen oder pumpfähigen Produkte auf eine äußere Wärmeübertragungsoberfläche (7) des Wärmeübertragungskörpers (3) aufgebracht werden können, von der Ablagerungen oder getrocknetes Produkt während der Drehung des Wärmeübertragungskörpers (3) abgeschabt werden können, wobei der rotierende Wärmeübertragungskörper (3) aufweist:
- eine hohle Antriebsachse (16) zum rotierbaren Anordnen in einem Gehäuse (1) der Vorrichtung,
- eine Einrichtung (10, 13) zum Liefern des Wärmemediums in Dampfform an die innere Wärmeübertragungsoberfläche des Wärmeübertragungskörpers (3),
- eine Einrichtung zum Leiten von Kondensat und Falschluft vom Inneren des Wärmeübertragungskörpers (3) durch die hohle Antriebsachse (16),
- Längsabschnitte, in die der hohle Verdampfungskörper (3) unterteilt ist und deren axiale Längen relativ zueinander derart dimensioniert sind, daß für einen gegebenen Fluß aus kondensiertem Dampf durch den Körper die vorteilhafteste Fließgeschwindigkeit für die Wärmeübertragung von der Wärmeübertragungsoberfläche des Wärmeübertragungskörpers (3) erzielt wird,
wobei jeder Längsabschnitt aufweist:
- einen rohrförmigen tragenden Mittelabschnitt, der mittels einer diametral verlaufenden Trennplatte (5) unterteilt ist in einen halbrohrförmigen Einlaßkanal (33a) zum Einlassen des Wärmemediums in Dampfform und einen halbrohrförmigen Auslaßkanal (34a) zum Abfließen und kontinuierlichen Fließen von Dampf und Kondensat in nachfolgende Längsabschnitte,
- Ringkanäle mit Durchgängen (30) zum Durchfluß des kondensierten Dampfes, wobei die Ringkanäle koaxial zum und um den rohrförmigen Mittelabschnitt angeordnet sind, wobei die Ringkanäle Seitenplatten (7; 21; 68) haben, die auf den in Abschnitte unterteilten rohrförmigen Mittelabschnitt mit einem Abstand zwischen benachbarten Seitenplatten von zwei benachbarten Ringkanälen angeordnet sind, so daß zwischen zwei benachbarten Ringkanälen Raum für eine Schabe- oder Bürstanordnung zur Verfügung gestellt wird, um Ablagerungen von der Wärmeübertragungsoberfläche des Wärmeübertragungskörpers zu entfernen,
- radiale Trennwände (6), die in den Durchgängen (30) der Ringkanäle angeordnet sind und mit der diametralen Trennplatte (5) verbunden sind,
- Einlaßöffnungen (33) in dem rohrförmigen Mittelabschnitt in der Nähe einer ersten Seite der Trennplatte (5), wobei die Einlaßöffnungen (33) den Einlaßkanal (33a) mit den Durchgängen (30) verbinden,
- Auslaßöffnungen (34) in dem rohrförmigen Mittelabschnitt in der Nähe der anderen Seite der Trennwand (5), wobei die Auslaßöffnungen (34) den Auslaßkanal (34a) mit den Durchgängen (30) verbinden, und
- eine halbkreisförmige Radialplatte (14), die ein Ende des Einlaßkanals (33a) abschließt, wobei die Abschnitte derart zusammengeschweißt sind, daß jeder einzelne Abschnitt relativ zu dem vorangehenden Abschnitt um 180° gedreht ist, wobei der Auslaßkanal (34a) eines Abschnitts mit dem Einlaßkanal (33a) des nachfolgenden Abschnitts verbunden wird.

2. Rotierbarer Wärmeübertragungskörper nach Anspruch 1, dadurch gekennzeichnet, daß die Ringkanäle des Wärmeübertragungskörpers Seitenplatten (7; 21; 68) haben, die auf den in Abschnitte unterteilten rohrförmigen Mittelabschnitt mit einem Abstand zwischen den Seitenplatten angeordnet sind, der während der Benutzung für Verdampfungsverfahren Raum für eine an einem Pendel aufgehängte Bürst- oder Schabanordnung (25 - 28) liefert oder während der Benutzung Raum für Trocknungsverfahren für Produktauftrag-Aggregate (58) und Abschab-Aggregate (46) liefert.

3. Rotierbarer Wärmeübertragungskörper nach Anspruch 1 oder 2 zur Verwendung in einer Vorrichtung für Verdampfungsverfahren, dadurch gekennzeichnet, daß die Ringkanäle aus Plattenringen mit konstanten Abständen zwischen Oberflächen der Ringkanäle in den Zwischenräumen zwischen ihnen aufgebaut sind, wobei zwei einander zugewandte Oberflächen mit Hilfe einer gewöhnlichen zweiseitigen Bürst- oder Schabanordnung (25 - 28) sauber gehalten werden können, welche auf einen Arm (26) angeordnet ist, der relativ zu dem Wärmeübertragungskörper beweglich angeordnet ist, so daß er während der Rotation des Wärmeübertragungskörpers für eine pendelähnliche Bewegung der Bürst- oder Schabanordnung von der Peripherie des Ringkanals zum Mittelabschnitt und zurück sorgen kann.

4. Verdampfungsvorrichtung, die einen rotierenden Wärmeübertragungskörper nach einem der vorangehenden Ansprüche aufweist, dadurch gekennzeichnet, daß die Vorrichtung aufweist: einen Sprührotor (36) zum Befeuchten der Wärmeübertragungsoberfläche des Wärmeübertragungskörpers (3), einen offenen Flüssigkeitskanal (38) zum Beliefern des Sprührotors, so daß es der zu verdampfenden Lösung gleichzeitig mit dem schrittweise Abgegebenwerden erlaubt wird, von einem Flüssigkeitseinlaß der Vorrichtung zu einem Konzentratauslaß der Vorrichtung zu fließen, so daß die Verweildauer der Lösung in der Vorrichtung verringert wird.

5. Verdampfungsvorrichtung, die einen rotierenden Wärmeübertragungskörper nach einem der vorangehenden Ansprüche aufweist, dadurch gekennzeichnet, daß die Vorrichtung aufweist: ein zylindrisches Gehäuse mit einer hauptsächlich horizontalen Achse, ein auf dem Boden des Gehäuses angeordnetes Zerstäubersystem (39, 40 und 41) und einen Dampfauslaß (42), wobei der Durchmesser des Gehäuses und die Plazierung des Wärmeübertragungskörpers über dem Boden des Gehäuses derart gewählt werden, daß zwischen dem Wärmeübertragungskörper und dem Zerstäubersystem (39, 40, 41) ein beträchtlicher freier Raum zur Verfügung gestellt wird, durch den sich die zu verdampfende Flüssigkeit während dem Durchgang von dem Zerstäubersystem bis zum Auftreffen auf den Wärmeübertragungskörper und die Gehäusewand bewegt und durch den der durch Verdampfung erzeugte Dampf zur gleichen Zeit auf den Dampfauslaß (42) zu fließt, so daß zusammen mit der Verdampfung eine Zersetzungswirkung erzielt wird, wenn Flüssigkeitsmischungen mit unterschiedlichen Siedepunkten behandelt werden.

6. Trocknungsvorrichtung, die einen rotierenden Wärmeübertragungskörper nach einem der Ansprüche 1 bis 3 aufweist, dadurch gekennzeichnet, daß der Wärmeübertragungskörper (3) in dem Gehäuse der Vorrichtung mit einer vertikalen Achse derart angeordnet ist, daß das feuchte pumpfähige Produkt, das getrocknet werden soll, auf den horizontal nach oben gewandten Oberflächen (68) der Ringkanäle verteilt werden kann, wobei die Vorrichtung ferner jeweils Auftrag-Aggregate (58) und Abschab-Aggregate (46) für den Auftrag und das Abschaben von Produkt von den Oberflächen (68) aufweist, wobei der Wärmeübertragungskörper mit dem gleichen konstanten Abstand zwischen der Oberfläche (68) eines Ringkanals und der ihm zugewandten Oberfläche des darüber liegenden Ringkanals aufgebaut ist, gleichgültig, ob der Zwischenraum zwischen diesen Oberflächen innerhalb eines Abschnitts ist oder an einer Stelle, wo es zwischen den beiden Oberflächen eine Verbindung zwischen zwei Abschnitten gibt.

7. Trocknungsvorrichtung nach Anspruch 6, dadurch gekennzeichnet, daß sie aufweist:
- ein Bewegungssystem für die Abschab-Aggregate (46), wobei das Bewegungssystem aufweist: eine Pendelachse (47), einen Hebel (48), der die Pendelachse (47) betätigt, um eine hin- und hergehende Drehbewegung zu machen, ein axial verschiebbares Rohr (50) auf der Pendelachse (47) mit einer Erweiterung (52), einen Arm (54), der an einem Ende des Arms (54) an der Pendelachse befestigt ist und an seinem anderen Ende in der Erweiterung (52) des verschiebbaren Rohrs (50) angeordnet ist, so daß er ein Drehmoment an das verschiebbare Rohr (50) übertragen kann, einen Pendelarm (49) für jeden Satz zusammenwirkender Heizoberflächen der Ringkanäle, der an einem Ende des Pendelarms (54) an dem verschiebbaren Rohr (50) und an seinem anderen Ende an einem Abschab-Aggregat (46) und einem Schabmesser (44) befestigt ist, ein mit dem verschiebbaren Rohr (50) verbundenes Hebe- und Senksystem, so daß dieses angehoben und abgesenkt werden kann, ebenso wie ein Hebeaggregat (45) zum Heben und Absenken der Pendelachse (47) und somit des gesamten Bewegungssystems und
- ein Bewegungssystem für die Auftrag-Aggregate (58), das hauptsächlich als das Bewegungssystem für die Abschab-Aggregate (46), aber ohne ein dem Hebeaggregat (45) entsprechendes Aggregat ausgebildet ist.

8. Trocknungsvorrichtung nach Anspruch 6 oder 7, dadurch gekennzeichnet, daß das Abschab-Aggregat (46) ein Schabmesser (44) mit einer Rückwand hat, deren Länge in der Längsrichtung des Pendelarms (49) es der gesamten kreisförmigen Heizoberfläche (68) eines Ringkanals erlaubt, abgeschabt zu werden, während sie sich um eine Umdrehung dreht und das Schabmesser eine Anzahl von Malen, z. B. 40 bis 50 mal, mit einer Pendelbewegung hin- und herbewegt werden kann, und daß das Schabmesser mit seiner Rückwand (44) mit den Seitenplatten (56, 57) verbunden ist, um zu verhindern, daß das gelöste getrocknete Produkt in Pulverform als eine Folge der Bewegung der Heizoberfläche weiterbefördert wird, wobei die Platten mit der Mitte in der Mitte der Pendelachse (47) zylindrisch sind und die Unterseite der äußersten Platte (56) in der Ebene der Kante des Schabmessers liegt, während die andere Platte (57) sich nur nach unten zu der Oberseite des getrockneten Produkts erstreckt.

9. Trocknungsvorrichtung nach Anspruch 8, dadurch gekennzeichnet, daß die Schabmesser (44) mittels eines Systems aus parallelen Dreharmen, Federn und daran angepaßten Anschlägen elastisch mit den Pendelarmen (49) verbunden sind.

10. Trocknungsvorrichtung nach Anspruch 6 und 7, dadurch gekennzeichnet, daß sie aufweist: biegsame Schläuche (63), mit den Schläuchen verbundene flache Düsen (59) zum Liefern eines pumpfähigen Produkts von den Schläuchen an die Düsen zur Verteilung auf den Heizoberflächen (68) des Wärmeübertragungskörpers (3), ein Bewegungssystem zum Ein- und Ausführen der Düsen relativ zum Mittelabschnitt des Wärmeübertragungskörpers und Hin- und Herbewegen relativ zur Längsrichtung eines Pendelarms (61) des Bewegungssystems in einer pendelartigen Weise, wobei die Düse eine Auslaßöffnung hat, deren Breite die Hälfte der Bewegung ist, die der Umfang der Heizoberflächen während einer vollen Bewegung der Düsen macht, einen rotierbar angeordneten Steuerschieber (65) zum allmählichen Sperren eines Teils der Auslaßöffnung der Düse, wobei die Aufhängung des Steuerschiebers an der Düse befestigt ist, einen ersten Hydraulikzylinder (66) zum Betätigen des Steuerschiebers, wobei die Aufhängung des ersten Hydraulikzylinders an der Düse befestigt ist und die Düse mittels paralleler Dreharme (51) mit dem Pendelarm (61) verbunden ist, einen mit der Düse verbundenen zweiten Hydraulikzylinder (62), um sie in einer Längsrichtung des Pendelarms zu verschieben, und eine Einrichtung zum Regulieren der Kapazität der Produktzuführungspumpen, so daß sie proportional zu dem Abstand der Düsenmündung von der Drehachse des Wärmeübertragungskörpers ist und dadurch dem freien Auslaßbereich der Düse, der von dem Steuerschieber freigegebenen ist, entspricht.

## Revendications

1. Corps creux rotatif (3) de transmission thermique destiné à être utilisé en ayant un axe de rotation pratiquement horizontal dans un dispositif destiné à évaporer des mélanges de liquides ou de solutions ayant tendance à former des dépôts ou destiné à être utilisé en ayant un axe de rotation pratiquement vertical dans un dispositif destiné à sécher des produits pouvant être pompés, lesquels liquides ou solutions ou produits pouvant être pompés peuvent être appliqués sur une surface extérieure de transmission thermique (7) du corps de transmission thermique (3) à partir de laquelle des dépôts ou un produit séché peuvent être raclés pendant la mise en rotation du corps de transmission thermique, le corps rotatif de transmission thermique (3) comportant :
- un axe d'entraînement creux (16) destiné à être monté de manière rotative dans un boîtier (1) du dispositif,
- des moyens (10, 13) pour alimenter le milieu thermique sous la forme de vapeur vers la surface intérieure de transmission thermique du corps de transmission thermique (3),
- des moyens pour faire avancer les condensats et de l'air parasite depuis l'intérieur du corps de transmission thermique (3) à travers l'axe d'entraînement creux (16),
- des tronçons longitudinaux dans lesquels le corps d'évaporation creux (3)est divisé et dont les longueurs axiales sont dimensionnées l'une par rapport à l'autre de telle sorte que pour un écoulement donné de vapeur condensée à travers le corps, la vitesse d'écoulement la plus avantageuse est obtenue pour la transmission thermique depuis la surface de transmission thermique du corps de transmission thermique, chaque tronçon longitudinal comportant :
- un tronçon médian de support tubulaire qui, par l'intermédiaire d'une plaque de séparation s'étendant diamétralement (5) est divisé en un canal d'entrée en forme de demi-tube (33a) destiné à l'admission du milieu thermique sous forme de vapeur et un canal de sortie en forme de demi-tube (34a) pour évacuer et un écoulement continu de vapeur et de condensat vers des tronçons longitudinaux ultérieurs,
- des canaux en anneau ayant des passages (30) pour écoulement traversant de la vapeur condensée, lesdits canaux en anneau étant disposés coaxialement au tronçon médian tubulaire et autour de celui-ci, lesdits canaux en anneau ayant des plaques latérales (7 ; 21 ; 68) montées sur le tronçon médian tubulaire divisé dans sa section, une distance existant entre les plaques latérales adjacentes de deux canaux en anneau adjacents de sorte qu'entre deux canaux en anneau adjacents un espace est fourni pour un agencement de raclage ou de brossage destiné à enlever les dépôts de la surface de transmission thermique du corps de transmission thermique,
- des parois radiales de séparation (6) disposées dans les passages (30) des canaux en anneau et reliées à la plaque de séparation diamétrale (S),
- des ouvertures d'entrée (33) dans le tronçon médian tubulaire situées au voisinage du premier côté de la plaque de séparation (5), lesdites ouvertures d'entrée (33) reliant le canal d'entrée (33a) aux passages (30),
- des ouvertures de sortie (34) du tronçon médian tubulaire, situées au voisinage de l'autre côté de la plaque de séparation (5), lesdites ouvertures de sortie (34) reliant le canal de sortie (34a) aux passages (30), et
- une plaque radiale semi-circulaire (14) qui ferme une extrémité du canal d'entrée (33a),
et les tronçons étant soudés ensemble de telle sorte que chaque tronçon individuel est tourné de 180° par rapport au tronçon précédent, de sorte que le canal de sortie (34a) d'un premier tronçon est relié au canal d'entrée (33a) du tronçon consécutif.

2. Corps rotatif de transmission thermique selon la revendication 1, caractérisé en ce que les canaux en anneau du corps de transmission thermique ont des plaques latérales (7 ; 21 ; 68) montées sur le tronçon médian tubulaire divisé dans sa section, une distance existant entre les plaques latérales qui, pendant l'utilisation pour des traitements d'évaporation, fournit de la place pour un agencement de brossage ou de raclage suspendu en pendule (25-28) ou fournit de la place pendant l'utilisation pour des traitements de séchage des ensembles d'application (58) de produit et des ensembles de raclage (46).

3. Corps rotatif de transmission thermique selon la revendication 1 ou 2, destiné à être utilisé dans un dispositif de traitement d'évaporation, caractérisé en ce que les canaux annulaires sont constitués d'anneaux formant plaque ayant des distances constantes entre les surfaces des canaux en anneau dans les espaces intermédiaires entre ceux-ci, de sorte que deux surfaces situées en vis-à-vis l'une de l'autre peuvent être maintenues propres par l'intermédiaire d'un agencement courant de brossage ou raclage des deux côtés (25-28) qui est monté sur un bras (26) qui est disposé de manière mobile par rapport au corps de transmission thermique de sorte qu'il peut donner à l'agencement de brossage ou de raclage un mouvement analogue à un pendule à partir de la périphérie du canal en anneau vers le tronçon médian, et en retour pendant la rotation du corps de transmission thermique.

4. Dispositif d'évaporation comportant un corps rotatif de transmission thermique selon l'une quelconque des revendications précédentes, caractérisé en ce que le dispositif comporte un rotor de pulvérisation (36) pour humecter la surface de transmission thermique du corps de transmission thermique (3), un canal ouvert pour liquide (38) destiné à alimenter le rotor de pulvérisation de sorte que la solution à évaporer peut, en même temps, entre des projections pas à pas vers l'extérieur, s'écouler depuis une entrée de liquide du dispositif vers une sortie de concentrat du dispositif, de sorte que le temps de séjour de la solution dans le dispositif est réduit.

5. Dispositif d'évaporation comportant un corps rotatif de transmission thermique selon l'une quelconque des revendications précédentes, caractérisé en ce que le dispositif comporte un boîtier cylindrique ayant un axe sensiblement horizontal, un système d'atomiseur (39, 40, 41) disposé au niveau de la partie inférieure du boîtier et une sortie de vapeur (42), le diamètre du boîtier et le positionnement du corps de transmission thermique au-dessus de la partie inférieure du boîtier étant choisis de telle sorte qu'entre le corps de transmission thermique et le système d'atomiseur (39, 40, 41) un espace libre important est fourni à travers lequel le liquide à évaporer se déplace pendant le passage depuis le système d'atomiseur pour venir frapper le corps de transmission thermique et la paroi de boîtier, et à travers lequel la vapeur produite par l'évaporation s'écoule en même temps en direction de la sortie de vapeur (42), de sorte qu'en association avec l'évaporation un effet d'extraction est obtenu lorsqu'on traite des mélanges de liquides ayant des points d'ébullition différents.

6. Dispositif de séchage comportant un corps rotatif de transmission thermique selon l'une quelconque des revendications 1 à 3, caractérisé en ce que le corps de transmission thermique (3) est monté dans le boîtier du dispositif en ayant un axe vertical de sorte que le produit humide pouvant être pompé à sécher peut être réparti sur les surfaces horizontales dirigées vers le haut (68) des canaux en anneau, le dispositif comportant en outre des ensembles d'application (58) et des ensembles de raclage (46) destinés, respectivement, à l'application ou au grattage de produit à partir des surfaces (68), le corps de transmission thermique étant construit en ayant la même distance constante entre la surface (68) d'un canal en anneau et la surface située en vis-à-vis de celle-ci du canal en anneau situé au-dessus, indépendamment du fait que l'espace intermédiaire entre ces surfaces est dans un tronçon ou un emplacement où, entre les deux surfaces, existe une liaison entre deux tronçons.

7. Dispositif de séchage selon la revendication 6, caractérisé en ce qu'il comporte :
- un système de déplacement pour les ensembles de grattage (46), le système de déplacement comportant un axe de pendule (47), un levier (48) qui actionne l'axe de pendule (47) pour effectuer un mouvement de rotation en va-et-vient, un tuyau axialement déplaçable (50), situé sur l'axe de pendule (47) ayant une extension (52), un bras (54) fixé sur l'axe de pendule au niveau d'une première extrémité du bras (54) et disposé dans l'extension (52) du tuyau déplaçable (50) au niveau de son autre extrémité de sorte qu'il peut transférer un couple vers le tuyau déplaçable (50), un bras de pendule (49) pour chaque ensemble de surfaces chauffantes coopérantes des canaux en anneau fixés sur le tuyau déplaçable (50) au niveau d'une première extrémité du bras de pendule (54) et à son autre extrémité à un ensemble de grattage (46) et un couteau de grattage (44), et un système de levage et abaissement relié au tuyau déplaçable (50) de sorte que celui-ci peut être levé et abaissé, ainsi qu'un ensemble de levage (45) pour lever et abaisser l'axe de pendule (47) et donc le système de déplacement complet, et
- un système de déplacement pour des ensembles d'application (58) formé principalement sous la forme du système de déplacement des ensembles de grattage (46) mais sans ensemble correspondant à l'ensemble de levage (45).

8. Dispositif de séchage selon la revendication 6 ou 7, caractérisé en ce que l'ensemble de grattage (46) a un couteau de grattage (44) ayant une paroi arrière ayant une longueur dans la direction longitudinale du bras de pendule (49) permettant de gratter toute la surface chauffante circulaire (68) d'un canal en anneau lorsqu'il fait un tour, et le couteau de grattage se déplace en va-et-vient avec un mouvement de pendule plusieurs fois, par exemple 40 à 50 fois, et en ce que, afin d'empêcher le produit séché libéré sous forme de poudre d'être transporté du fait du déplacement de la surface chauffante, le couteau de raclage avec sa surface arrière (44) est relié aux plaques latérales (56, 57), les plaques sont cylindriques, l'axe étant au centre de l'axe de pendule (47), le côté inférieur de la plaque la plus à l'extérieur (56) se trouve dans le plan du bord du couteau de grattage, alors que l'autre plaque (57) s'étend uniquement vers le bas vers le côté supérieur du produit séché.

9. Dispositif de séchage selon la revendication 8, caractérisé en ce que les couteaux de grattage (44) sont reliés de manière élastique aux bras de pendule (49) par l'intermédiaire d'un système de bras pivotants parallèles, de ressorts et de butées adaptés sur celui-ci.

10. Dispositif de séchage selon les revendications 6 et 7, caractérisé en ce qu'il comporte des tuyaux souples (63), des buses plates (59) reliées aux tuyaux pour alimenter un produit pouvant être pompé vers les buses à partir des tuyaux pour distribution sur les surfaces chauffantes (68) du corps de transmission thermique (3), un système de déplacement pour amener les buses d'une manière analogue à un pendule vers l'intérieur et vers l'extérieur par rapport au tronçon médian du corps de transmission thermique et en va-et-vient par rapport à la direction longitudinale d'un bras de pendule (61) du système de déplacement, la buse ayant une ouverture de sortie dont la largeur est la moitié du déplacement qu'effectue la périphérie des surfaces thermiques pendant un déplacement entier des buses, une vanne à coulisseau disposée de manière rotative (65) pour le blocage graduel d'une partie de l'ouverture de sortie de la buse, la suspension de la vanne à coulisseau étant fixée sur la buse, un premier cylindre hydraulique (66) pour actionner la vanne à coulisseau, la suspension du premier cylindre étant fixée sur la buse, et la buse étant reliée par l'intermédiaire de bras pivotants parallèles (51) au bras de pendule (61), un second cylindre hydraulique (62) relié à la buse pour la déplacer dans la direction longitudinale du bras de pendule, et des moyens pour réguler la capacité des pompes d'alimentation de produit de sorte qu'elle soit proportionnelle à la distance de l'orifice de buse à partir de l'axe de rotation du corps de transmission thermique, en correspondance ainsi avec la surface de sortie libre de la buse exposée par la vanne à coulisseau.
